(19) Europäisches Patentamt / European Patent Office / Office européen des brevets

(11) **EP 2 725 440 A1**

(12) **EUROPEAN PATENT APPLICATION**
published in accordance with Art. 153(4) EPC

(43) Date of publication:
**30.04.2014 Bulletin 2014/18**

(21) Application number: **12802500.4**

(22) Date of filing: **27.03.2012**

(51) Int Cl.:
*G05B 19/418* (2006.01)     *G06Q 10/04* (2012.01)
*G06Q 50/04* (2012.01)

(86) International application number:
**PCT/JP2012/057844**

(87) International publication number:
**WO 2012/176520 (27.12.2012 Gazette 2012/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2011 JP 2011137744**

(71) Applicant: **Yanmar Co., Ltd.**
**Osaka-shi, Osaka 530-8311 (JP)**

(72) Inventor: **NAGAKURA, Katsuhiko**
**Osaka-shi**
**Osaka 530-8311 (JP)**

(74) Representative: **Tischner, Oliver**
**Lavoix Munich**
**Bayerstrasse 83**
**80335 München (DE)**

(54) **PREDICTION DEVICE, PREDICTION METHOD AND PREDICTION PROGRAM**

(57)     Provided are a prediction device, a prediction method, and a prediction program having a high prediction accuracy in prediction of a variable factor of a prediction object concerning a product or a production process.

For a plurality of items allowed to serve as variable factors of the prediction object, for each item, a factorial effect value is derived that represents the SN ratio of the prediction object to each data including the data of the item relative to the SN ratio of the prediction object to each data excluding the data of the item. Then, the strength of the SN ratio of the comprehensive estimated value to the data of a plurality of items selected in descending order of the derived factorial effect value is calculated for each value of the number of items. Then, on the basis of the SN ratio of the comprehensive estimated value calculated for each value of the number of items, the number of items is determined. Then, in descending order of the derived factorial effect value, items in the determined number of items are selected. Then, the selected items are outputted as a prediction result for the prediction object.

FIG. 10

PREDICTION DEVICE 1

- START
- RECORD THE DATA OF THE PREDICTION OBJECT AND THE PLURALITY OF ITEMS — S101
- CALCULATE THE PROPORTIONALITY CONSTANT AND THE SN RATIO — S102
- CALCULATE THE ESTIMATED VALUE FOR THE PREDICTION OBJECT — S103
- CALCULATE THE COMPREHENSIVE ESTIMATED VALUE — S104
- CALCULATE THE SN RATIO OF THE COMPREHENSIVE ESTIMATED VALUE — S105
- DERIVE THE FACTORIAL EFFECT VALUE — S106
- CALCULATE FOR EACH VALUE OF THE NUMBER OF ITEMS THE SN RATIO OF THE COMPREHENSIVE ESTIMATED VALUE — S107
- DETERMINE THE NUMBER OF ITEMS — S108
- SELECT ITEMS — S109
- DERIVE A PREDICTION FORMULA — S110
- OUTPUT SELECTED ITEMS AND THE PREICTION FORMULA — S111
- END

EP 2 725 440 A1

## Description

### Field of the Invention

The present application relates to a prediction device, a prediction method, and a prediction program predicting a variable factor of a prediction object on the basis of the prediction object concerning a product or a production process and plural items of process step values allowed to serve as variable factors of the prediction object.

### Background of the Invention

In process control or quality control such as stabilization of a production process and improvement of product quality, recognition of a variable factor of the production process or the product quality serving as the object of control is one of important issues.

As a method of recognizing a variable factor in process control or the like, various analysis methods have been proposed. An example of such an analysis method is a multivariate analysis such as a multiple regression analysis and a T-method (for example, see Nonpatent Document 1).

### Prior Art References

### Patent Document

Nonpatent Document 1

Kazuo Tatebayashi (Editor), Shoichi Tejima, and Yoshiko Hasegawa, "Introduction to MT system", Nikkagiren Shuppan-Sha (JUSE Press, Ltd.), December, 2008.

### Summary of the Invention

### Problems to be Solved by the Invention

Nevertheless, for example, in analysis using the multiple regression analysis, a problem arises that when the number of items is greater than the number of data pieces, analysis itself is not achievable. In the T-method, this problem is resolved, nevertheless, a problem remains concerning how to select items to be used in the analysis. In the selection of items, for example, a technique of two-sided T-method has been proposed as described in Nonpatent Document 1.

The inventor of the present application has found a problem of further improving a prediction accuracy on condition that a prediction method using the T-method is employed as a basis. Then, in order to resolve the problem, the present invention is to provide a prediction device, a prediction method, and a prediction program realizing improvement in the prediction accuracy.

### Means for Solving the Problem

The prediction device according to the present invention is characterized by a prediction device that is provided with recording means recording data obtained by quantification of a prediction object concerning a product or a production process and data of process step values of a plurality of items allowed to serve as a variable factor of the prediction object and that predicts the variable factor of the prediction object on the basis of the data recorded in the recording means, the prediction device comprising:

derivation means deriving for each item allowed to serve as a variable factor a factorial effect value representing a strength of correlation of the prediction object to the data of each item including the data of the item relative to a strength of correlation of the prediction object to the data of the other items excluding the data of the item;
calculation means calculating for each value of the number of items a strength of correlation of the prediction object to the data of a plurality of items selected in descending order of the factorial effect value derived by the derivation means;
determination means determining the number of items on the basis of the strength of correlation for each value of the number of items calculated by the calculation means;
selection means selecting items in the number of items determined by the determination means, in descending order of the factorial effect value derived by the derivation means; and output means outputting a plurality of items selected by the selection means, as a prediction result for the variable factor of the prediction object.

The prediction device according to the present invention is characterized in that the calculation means includes: means setting up as an initial value of the threshold a value smaller than or equal to the minimum (or greater than or equal to the maximum) of the factorial effect values derived by the derivation means; first means selecting an item whose calculated factorial effect value is greater than or equal to the set-up threshold; second means calculating a strength of correlation of the prediction object to the data of the selected item; and third means resetting the threshold to be a value increased (or a value reduced) by a given value, and in that the first means, the second means, and the third means calculate for each value of the number of items the strength of correlation of the prediction object to the data of a plurality of selected items.

The prediction device according to the present invention is characterized by further comprising prediction formula derivation means deriving a prediction formula based on a weight for each item based on the strength of correlation of the prediction object to the data of each item selected by the selection means and a proportionality constant for each item representing a linear relation between the data of each selected item and the prediction object or a nonlinear relation alternative to the linear relation.

The prediction method according to the present invention is characterized by a prediction method that a prediction device capable of accessing recording means recording data obtained by quantification of a prediction object concerning a product or a production process and data process step values of a plurality of items allowed to serve as a variable factor of the prediction object predicts the variable factor of the prediction object on the basis of the data recorded in the recording means, wherein the prediction device executes: a step of deriving for each item allowed to serve as a variable factor a factorial effect value representing a strength of correlation of the prediction object to the data of each item including the data of the item relative to a strength of correlation of the prediction object to each data of the other items excluding the data of the item; a step of calculating for each value of the number of items a strength of correlation of the prediction object to the data of a plurality of items selected in descending order of the factorial effect value derived by the derivation means; a step of determining the number of items on the basis of the strength of correlation for each value of the number of items calculated by the calculation means; a step of selecting items in the number of items determined by the determination means, in descending order of the factorial effect value derived by the derivation means; and a step of outputting a plurality of items selected by the selection means, as a prediction result for the variable factor of the prediction object.

The prediction program according to the present invention is characterized by a prediction program causing a computer capable of accessing recording means recording data obtained by quantification of a prediction object concerning a product or a production process and data of process step values of a plurality of items allowed to serve as a variable factor of the prediction object to execute processing of predicting the variable factor of the prediction object on the basis of the data recorded in the recording means, the prediction program causing the computer to execute: a procedure of deriving for each item allowed to serve as a variable factor a factorial effect value representing a strength of correlation of the prediction object to the data of each item including the data of the item relative to a strength of correlation of the prediction object to each data of the other items excluding the data of the item; a procedure of calculating for each value of the number of items a strength of correlation of the prediction object to the data of a plurality of items selected in descending order of the factorial effect value derived by the derivation means; a procedure of determining the number of items on the basis of the strength of correlation for each value of the number of items calculated by the calculation means; a procedure of selecting items in the number of items determined by the determination means, in descending order of the factorial effect value derived by the derivation means; and a procedure of outputting a plurality of items selected by the selection means, as a prediction result for the variable factor of the prediction object.

In the present invention, the number of items is determined on the basis of the strength of correlation for each value of the number of items. Then, on the basis of the determined number of items, items allowed to serve as objects of analysis which are candidates of the variable factor are selected so that optimal item selection is realized.

In the present invention, in derivation of the prediction formula, a nonlinear component is suitably taken into consideration so that the prior-art method is allowed to be expanded to a prediction method using various items.

Effect of the Invention

In the present invention, in selection of items to be checked as candidates of analysis, the number of items is determined on the basis of the correlation for each item and then optimal item selection is achieved on the basis of the number of items and the factorial effect value having been determined. This provides an excellent effect like improvement in the prediction accuracy and the like.

In the present invention, in derivation of the prediction formula, a nonlinear component is allowed to be suitably taken into consideration. Thus, prediction is allowed to be applied even for a data change of an item not having linearity. This provides an excellent effect like improvement in the prediction accuracy and the like.

**Brief Description of the Drawings**

[FIG. 1] FIG. 1 is a table illustrating an example of data of each item and a prediction object used in a prediction method according to the present invention.

[FIG. 2] FIG. 2 is a table illustrating an example of a proportionality constant 6 and an SN ratio η of each item used in a prediction method according to the present invention.

[FIG. 3] FIG. 3 is a table illustrating an example of an actual value and a comprehensive estimated value of a prediction object used in a prediction method according to the present invention.

[FIG. 4] FIG. 4 is an example of a factor effect diagram used in a prediction method according to the present invention.

[FIG. 5] FIG. 5 is a graph illustrating an example of influence on a factorial effect of each item used in a prediction method according to the present invention.

[FIG. 6] FIG. 6 is a graph illustrating an example of a relation between the number of selected items and the SN ratio of a comprehensive estimated value in a prediction method according to the present invention.

[FIG. 7A] FIG. 7A is a graph illustrating an example of the SN ratio of a comprehensive estimated value to selected items in a prediction method according to the present invention.

[FIG. 7B] FIG. 7B is a graph illustrating an example of a contribution percentage to selected items in a prediction method according to the present invention.

[FIG. 8] FIG. 8 is a graph conceptually illustrating an example of processing of determining an optimal value for the number of selected items in a prediction method according to the present invention.

[FIG. 9] FIG. 9 is a block diagram illustrating an exemplary configuration of a prediction device of the present invention.

[FIG. 10] FIG. 10 is a flow chart illustrating an example of prediction processing performed by a prediction device of the present invention.

[FIG. 11] FIG. 11 is a flow chart illustrating an example of prediction processing performed by a prediction device of the present invention.

[FIG. 12] FIG. 12 is an explanation diagram conceptually illustrating items concerning quality control according to Implementation Example 1 in which a prediction method of the present invention is applied.

[FIG. 13] FIG. 13 is a control diagram illustrating a fluctuation of a prediction object according to Implementation Example 1 in which a prediction method of the present invention is applied.

[FIG. 14A] FIG. 14A is a graph illustrating an example of influence on a factorial effect value and the like of each item according to Implementation Example 1 in which a prediction method of the present invention is applied.

[FIG. 14B] FIG. 14B is a graph illustrating an example of influence on a factorial effect value and the like of each item according to Implementation Example 1 in which a prediction method of the present invention is applied.

[FIG. 15] FIG. 15 is a scattering diagram illustrating a relation between an actual measurement value and an estimated value according to Implementation Example 1 in which a prediction method of the present invention is applied.

[FIG. 16] FIG. 16 is a control diagram illustrating a fluctuation of a prediction object according to Implementation Example 1 in which a prediction method of the present invention is applied.

[FIG. 17] FIG. 17 is a table illustrating contents of items according to Implementation Example 2 in which a prediction method of the present invention is applied.

[FIG. 18] FIG. 18 is a graph illustrating an example of influence on a factorial effect value of each item according to Implementation Example 2 in which a prediction method of the present invention is applied.

[FIG. 19] FIG. 19 is a graph illustrating a relation between an actual measurement value and an estimated value according to Implementation Example 2 in which a prediction method of the present invention is applied.

[FIG. 20] FIG. 20 is a scattering diagram illustrating a relation between an actual measurement value and an estimated value in Implementation Example 2 in which a prediction method of the present invention is applied.

[FIG. 21] FIG. 21 is a graph illustrating a relation between an actual measurement value and an estimated value according to Implementation Example 2 in which a prediction method of the present invention is applied.

**Mode of Implementing the Invention**

The present invention is described below in detail with reference to the drawings illustrating an embodiment thereof.

First, a theory providing a basis for a prediction method according to the present invention is described below. The prediction method according to the present invention has been obtained by performing various technical improvements on a prediction method employing an MT system, specifically, a T-method, for the purpose of achieving industrial feasibility. That is, an object is to, by regarding as an objective characteristic a prediction object concerning a product or a production process, predict the variable factor of the prediction object and predict the fluctuation of the prediction object by using the data concerning plural items of process step values allowed to serve as variable factors of the prediction object. Here, the prediction object indicates quantifiable data such as a measured value of the quality, the quantity, or the like of a manufactured industrial product and a process step value or and any other control value in a production process. However, the prediction object is not necessarily an industrial product. That is, the yield, a characteristic value, or the like of a product such as an agricultural product other than an industrial product may be adopted as the prediction object. As such, application is allowed in various fields.

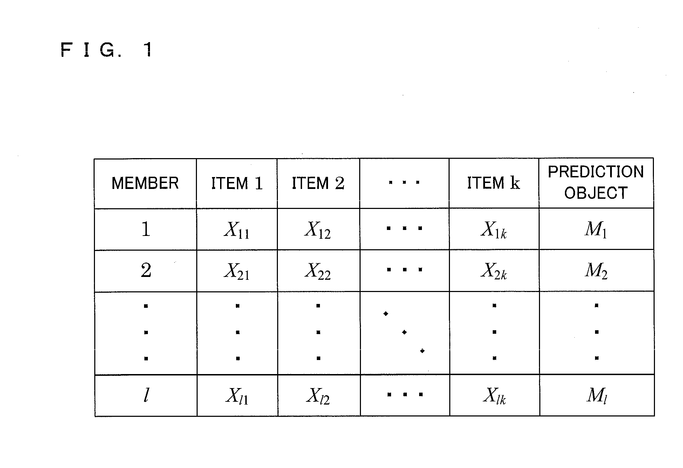

First, outlines of a T-method applied to the prediction method according to the present invention are described below. FIG. 1 is a table illustrating an example of the data of each item and the prediction object used in the prediction method according to the present invention. In FIG. 1, the member indicates an index to a record in which correspondence is assigned between the prediction object and each item allowed to serve as its variable factor. Each member is expressed by 1, 2, ..., 1. An item 1, an item 2, ..., an item k indicate a plurality of items representing process step values allowed to serve as variable factors of the prediction object. X11, X12, ... indicate the data of the items. The prediction object indicates an item representing the prediction object. M1, M2, ... indicate the data obtained by quantification of the prediction object. Here, actual data may be employed as data to be used for prediction. However, it is preferable that arithmetic operation of subtracting from the data of each item the average of the data of the item is performed so that the data is normalized and then the obtained data is used. This normalization allows a later-described prediction formula to be expressed as a straight line passing through the origin in the unit space for each item.

Then, a proportionality constant 6 and an SN ratio η (a square ratio) are calculated for each item according to the following Formula 1 and Formula 2. The SN ratio is a value indicated by using the inverse of the variance as indicated in the following Formula 2. Then, the SN ratio is the sensitivity of the prediction object to each item and indicates the strength of correlation between each item and the prediction object.

[Mathematical Expression 1]

a proportionality constant

$$\beta_1 = \frac{M_1 X_{11} + M_2 X_{21} + \cdots + M_l X_{l1}}{r} \qquad \cdots \text{ Formula 1}$$

an SN ratio

$$\eta_1 = \begin{cases} \dfrac{\dfrac{1}{r}\left(S_{\beta 1} - V_{e1}\right)}{V_{e1}} & \left(\text{If } S_{\beta 1} > V_{e1}\right) \\ 0 & \left(\text{If } S_{\beta 1} \leq V_{e1}\right) \end{cases} \qquad \cdots \text{ Formula 2}$$

where effective number of replications

$$r = M_1^2 + M_2^2 + \cdots + M_l^2$$

total variation

$$S_{T1} = X_{11}{}^2 + X_{21}{}^2 + \cdots + X_{l1}{}^2$$

variation of the proportional

$$S_{\beta 1} = \frac{(M_1 X_{11} + M_2 X_{21} + \cdots + M_l X_{l1})^2}{r}$$

error variation

$$S_{e1} = S_{T1} - S_{\beta 1}$$

error variance

$$V_{el} = \frac{S_{e1}}{l-1}$$

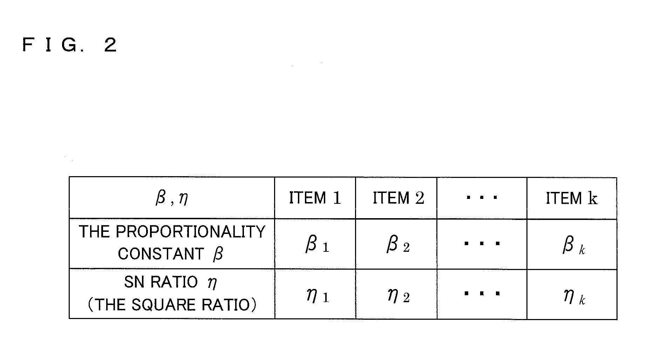

Here, the above-mentioned Formula 1 and Formula 2 are formulas used for calculating the proportionality constant 6 and the SN ratio $\eta$ (the square ratio) for the item 1. Then, calculation similar to that for the item 1 is performed also on the items ranging from the item 2 to the item k. FIG. 2 is a table illustrating an example of the proportionality constant 6 and the SN ratio $\eta$ (the square ratio) of each item used in the prediction method according to the present invention. In FIG. 2, the proportionality constant 6 and the SN ratio $\eta$ (the square ratio) for each item calculated by applying the above-mentioned Formula 1 and Formula 2 to each item are illustrated in the form of a table.

Then, by using the proportionality constant 6 and the SN ratio $\eta$ (the square ratio) for each item, an estimated value for the output of the prediction object for each item is calculated for each member. For the i-th member, an estimated value for the output by the item 1 is expressed by the following Formula 3. Further, similarly, an estimated value is calculated for the item 2 to the item i.

[Mathematical Expression 2]

$$\hat{M}_{i1} = \frac{X_{i1}}{\beta_1} \qquad \cdots \text{ Formula 3}$$

Then, a comprehensive estimated value is calculated by using as weighting factors the SN ratios $\eta 1$, $\eta 2$, ..., $\eta l$ (the square ratios) each serving as the estimation precision for the estimated value of each item. Thus, the comprehensive estimated value of the prediction object for the i-th member is expressed by the following Formula 4.

[Mathematical Expression 3]

the comprehensive estimated value

$$\hat{M}_i = \frac{\eta_1 \times \dfrac{X_{i1}}{\beta_1} + \eta_2 \times \dfrac{X_{i2}}{\beta_2} + \cdots + \eta_k \times \dfrac{X_{ik}}{\beta_k}}{\eta_1 + \eta_2 + \cdots + \eta_k} (i = 1, 2, \cdots, l) \quad \cdots \text{ Formula 4}$$

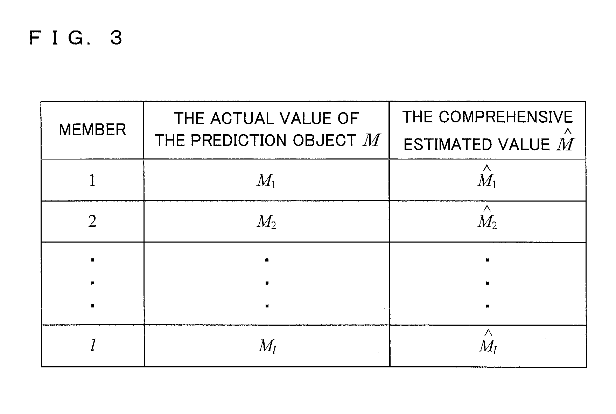

FIG. 3 is a table illustrating an example of the actual value and the comprehensive estimated value of the prediction object used in the prediction method according to the present invention. FIG. 3 is a table illustrating in a list form the actual value of the prediction object indicating the actual data or the normalized data of each member and the comprehensive estimated value calculated according to the above-mentioned Formula 4. Then, by using the actual value and the comprehensive estimated value of the prediction object illustrated in the table of FIG. 3, the SN ratio $\eta$ (db) of the comprehensive estimated value is allowed to be calculated according to the following Formula 5.

[Mathematical Expression 4]

the SN ratio of the comprehensive estimated value

$$\eta = 10 \log \left( \frac{\frac{1}{r}(S_\beta - V_e)}{V_e} \right) (db) \qquad \cdots \quad \text{Formula 5}$$

where
linear function

$$L = M_1 \hat{M}_1 + M_2 \hat{M}_2 + \cdots + M_l \hat{M}_l$$

effective number of replications

$$r = M_1{}^2 + M_2{}^2 + \cdots + M_l{}^2$$

total variation

$$S_T = \hat{M}_1{}^2 + \hat{M}_2{}^2 + \cdots + \hat{M}_l{}^2 \quad (f = l)$$

variation of the proportional

$$S_\beta = \frac{L^2}{r} \quad (f = 1)$$

error variation

$$S_e = S_T - S_\beta \quad (f = l - 1)$$

error variance

$$V_e = \frac{S_e}{l - 1}$$

As such, a comprehensive estimation formula is allowed to be derived as a prediction formula representing the relation between the data of the item and the comprehensive estimated value of the prediction object. Nevertheless, the comprehensive estimation formula using all items related to the prediction object does not necessarily have the highest prediction accuracy. Thus, in order that the contribution percentage to the influence on the prediction object should be increased so that the prediction accuracy should be improved, a suitable combination of items need be selected from among all items.

Here, the prediction formula is premised on a situation that the relation between the item and the prediction object has linearity. Nevertheless, the relation between the item and the prediction object does not necessarily have linearity. As a result, in some cases, the predicted value and the actual measurement value of the prediction object deviate from each other so that the prediction accuracy is degraded. Thus, in the present invention, when necessary, in place of the prediction formula representing a linear relation, a prediction formula representing a nonlinear relation may be used. That is, a prediction formula approximating the relation between the prediction object and the item in a secondary expression may be used as a prediction formula representing a nonlinear relation in place of the prediction formula representing a linear relation.

A detailed technique for a case that the prediction formula representing a nonlinear relation is used is described below. When a nonlinear relation is present between the item X and the prediction object y, normalization processing is performed in which the average of y and the average of X are calculated as the unit space data serving as the reference and then the average is subtracted from each data of y and X. Then, by using the values of X varying relative to y, approximation is performed with a polynomial such as a secondary expression. Then, the data of X is converted by using the approximated values. That is, it is understood that in the case of a linear relation, the intact data or alternatively the data of simply normalized X is applied to Formula 4 but that in the nonlinear case, the data of X having undergone data conversion is applied to Formula 4.

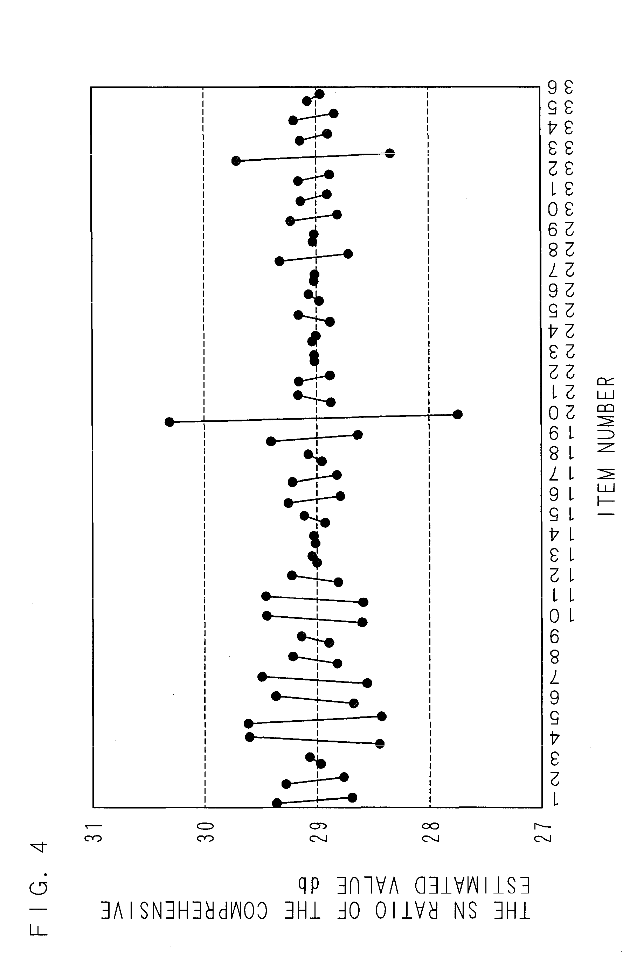

FIG. 4 is an example of a factor effect diagram used in the prediction method according to the present invention. FIG. 4 is a factor effect diagram using an orthogonality table of a two-level system indicating a selection method for items. The horizontal axis indicates items serving as objects of selection and the vertical axis indicates the SN ratio of the comprehensive estimated value. Then, the SN ratio is illustrated for each item. Further, in the orthogonality table illustrated in FIG. 4, for each item, the SN ratio of the comprehensive estimated value to each data including the data of the item, that is, the strength of correlation of the prediction object, is illustrated on the left-hand side and the SN ratio of the comprehensive estimated value to each data excluding the data of the item is illustrated on the right-hand side. Yet detailed description is given below. In the example illustrated in FIG. 4, 36 items are adopted objects of selection. Thus, the number of possible combinations of selection of items is $2^{36}-1$. For each of such combinations, the SN ratio of the prediction object to one or a plurality of items is derived. Then, the average of the SN ratios of combinations each including the object item and the average of the SN ratios of combinations each excluding the item are calculated. In FIG. 4, for each item, the average of the SN ratios including the data of the item calculated as described above is illustrated on the left-hand side and the average of the SN ratios excluding the data of the item is illustrated on the right-hand side.

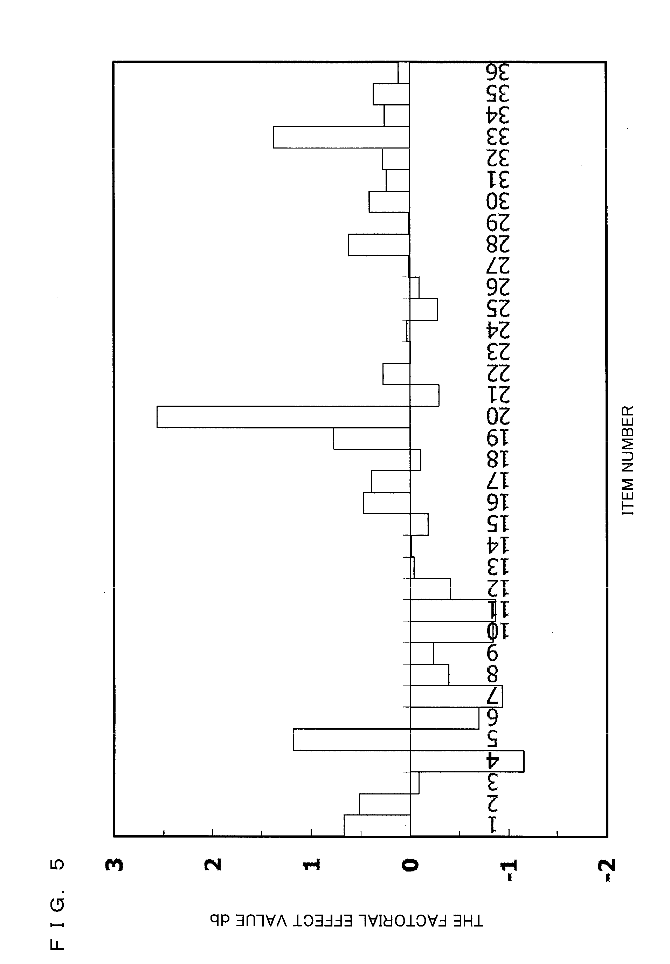

FIG. 5 is a graph illustrating an example of influence on the factorial effect of each item used in the prediction method according to the present invention. In the graph illustrated in FIG. 5, the horizontal axis indicates items serving as objects of selection and the vertical axis indicates the factorial effect value. Then, the factorial effect value is illustrated for each item. The factorial effect value indicated on the vertical axis of FIG. 5 indicates, in the SN ratio of the comprehensive estimated value representing the strength of correlation of the prediction object in db unit in FIG. 4, the SN ratio on the left-hand side relative to the SN ratio on the right-hand side, that is, a value obtained by subtracting the SN ratio on the left-hand side from the SN ratio on the right-hand side. Thus, in FIG. 5, an item whose factorial effect value is positive indicates that when the item is used, the SN ratio of the comprehensive estimated value increases. For example, in a method referred to as a two-sided T-method, such items whose factorial effect value is positive are selected alone and then analysis by the T-method is performed. Nevertheless, the inventor of the present application has found that the method that such items whose factorial effect value is positive are selected alone is not necessarily an optimal selection method.

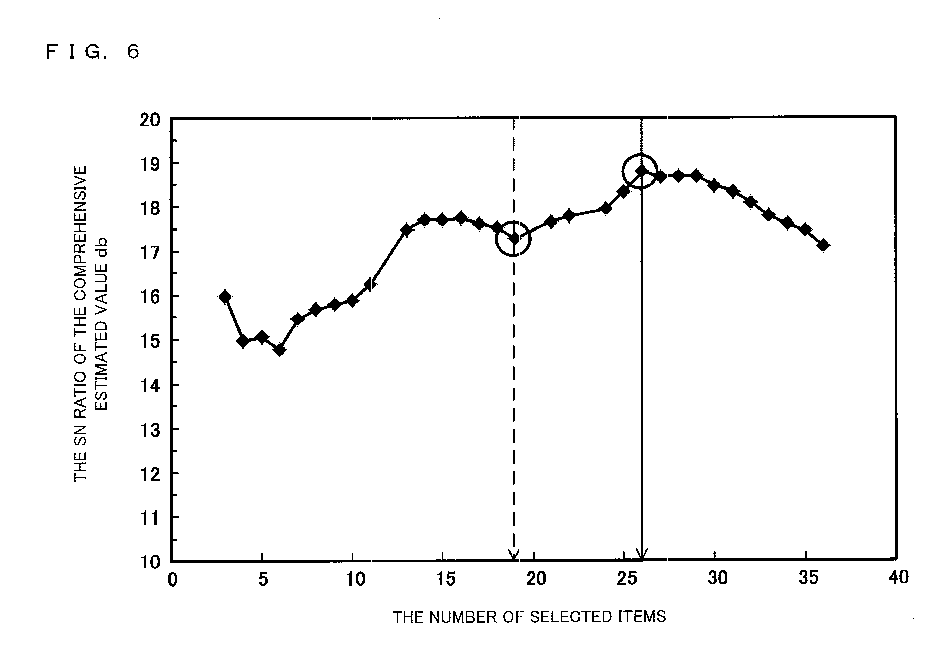

FIG. 6 is a graph illustrating an example of the relation between the number of selected items and the SN ratio of the comprehensive estimated value in the prediction method according to the present invention. In FIG. 6, the horizontal axis indicates the number of selected items and the vertical axis indicates the SN ratio of the comprehensive estimated value. Then, the relation between these is illustrated. Here, the selection of items indicates that items in a number expressed by the number of selected items are selected in descending order of the factorial effect value. That is, when the number of selected items is 10, it is indicated that an item whose factorial effect value is the maximum up to an item having the tenth highest value are selected. Further, the number 19 of selected items indicated by a dotted line with an arrow illustrates the SN ratio of a case that items whose factorial effect value is positive are selected alone in FIG. 5. As illustrated in FIG. 6, the SN ratio is not necessarily monotonically increasing or monotonically decreasing relative to the number of selected items. Further, even when items whose factorial effect value is positive are selected alone, the SN ratio does not necessarily become the maximum. In the example illustrated as a graph in FIG. 6, the SN ratio becomes the maximum when the number of selected items is set to be 26 as indicated by a solid line with an arrow.

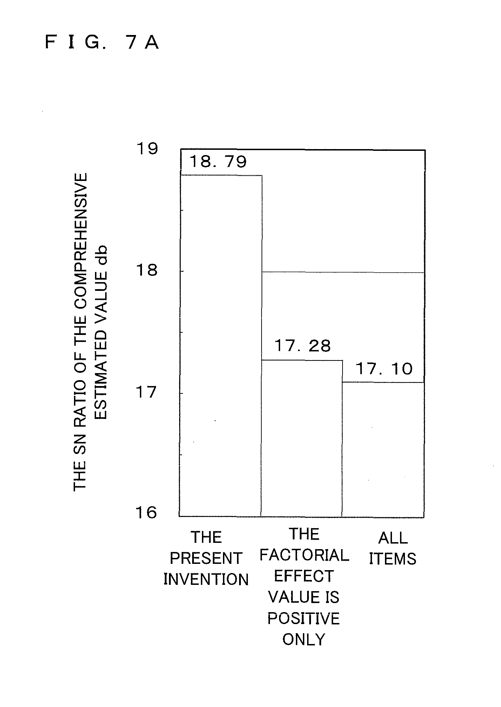

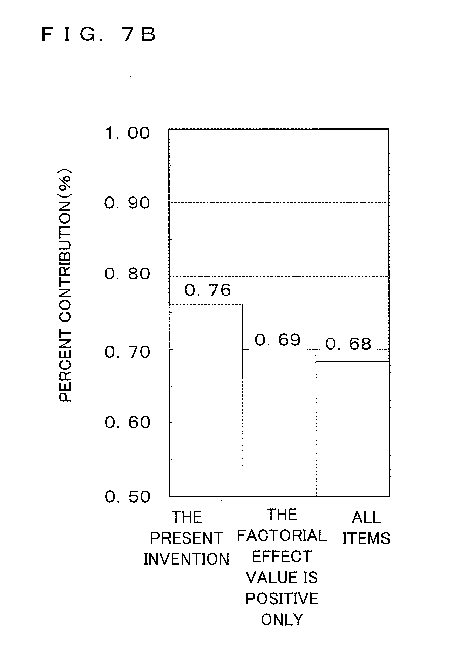

FIG. 7 is a graph illustrating an example of the relation with the SN ratio of the comprehensive estimated value relative to the number of selected items in the prediction method according to the present invention. FIG. 7A illustrates the SN ratios of the comprehensive estimated value of a case that the 26 items maximizing the SN ratio are selected that are used in the prediction method according to the present invention, a case that items whose factorial effect value is positive are selected alone, and a case that all items are selected. Further, FIG. 7B illustrates the contribution percentages of a case that the 26 items maximizing the SN ratio are selected that are used in the prediction method according to the present invention, a case that items whose factorial effect value is positive are selected alone, and a case that all items are selected. As seen also from FIGS. 7A and 7B, when items are selected in a number equal to the number of items maximizing the SN ratio used in the prediction method according to the present invention, the SN ratio and the contribution percentage are the most excellent values.

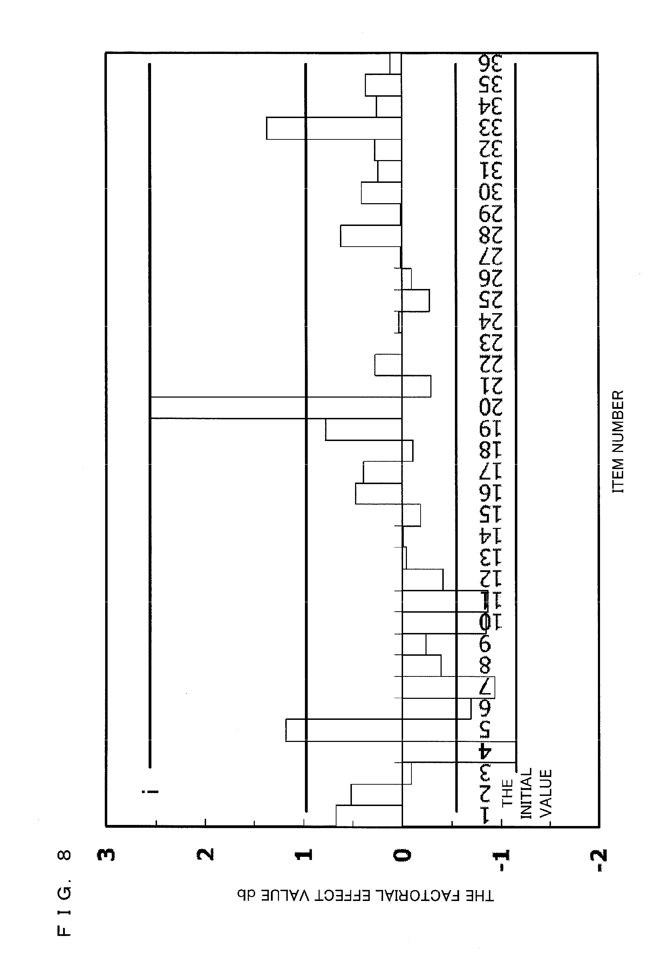

FIG. 8 is a graph conceptually illustrating an example of processing of determining an optimal value for the number of selected items in the prediction method according to the present invention. FIG. 8 illustrates an example of the processing of determining an optimal value for the number of selected items in the graph illustrated in FIG. 6. First, a value smaller than or equal to the minimum of the factorial effect values is set up as the initial value of the threshold. In FIG. 8, the horizontal line illustrated as the initial value indicates the initial value of the threshold. Then, items whose factorial effect value is greater than or equal to the threshold are selected. In a case that the minimum of the factorial effect values is set up as the initial value of the threshold, all items are selected at this stage. Then, the SN ratio of the comprehensive estimated value concerning the prediction object to the data of the selected items is calculated. Then, the set-up threshold is reset to a value increased by a given value. Then, items whose factorial effect value is greater than or equal to the threshold having been reset are re-selected. Such processing is repeated until the threshold becomes greater than or equal to the maximum of the factorial effect values, that is, reaches the horizontal line indicated by i in FIG. 8. As a result, the SN ratio of the comprehensive estimated value to the data of a plurality of selected items is allowed to be calculated for each value of the number of items. Here, the initial value of the threshold may be set to be greater than or equal to the maximum of the factorial effect values and then items greater than or equal to the set-up threshold may be selected. Then, after calculating the SN ratio of the comprehensive estimated value, the threshold may be reset to a value reduced by a given value.

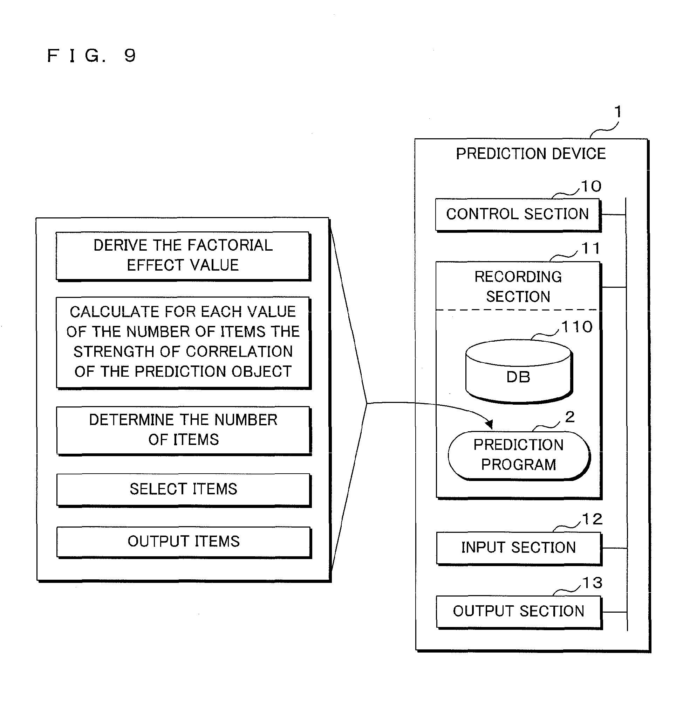

Next, the prediction method according to the present invention is described below for a mode of realization using a device such as a computer of diverse kind. FIG. 9 is a block diagram illustrating an exemplary configuration of a prediction device of the present invention. Numeral 1 in FIG. 9 indicates a prediction device employing the prediction method of the present invention. The prediction device 1 is constructed from a computer of diverse kind like a personal computer. The prediction device 1 comprises various mechanisms including a control section 10, a recording section 11, an input section 12, and an output section 13.

The control section 10 is a mechanism such as a CPU controlling the entire device and executing various arithmetic operations.

The recording section 11 indicates various recording means recording various information and is a mechanism such as a volatile memory like various RAMs temporarily recording information and a nonvolatile memory like a ROM and a hard disk drive. Further, any other device such as an external hard disk drive, an optical disk drive, and a file server connected through a communication network may be used as the recording section 11. That is, the recording section 11 mentioned here is a generic term of one or a plurality of information recording media allowed to be accessed from the control section 10.

Here, the recording section 11 records a prediction program 2 of the present invention containing various procedures of realizing the prediction method of the present invention. Further, a part of the recording area of the recording section 11 is used as a database (DB) 110 recording data concerning the prediction object and the plurality of items. Then, the control section 10 is allowed to access the database 110 when necessary. The database 110 records the data, for example, in the form of a table illustrated in FIG. 1.

The input section 12 is a mechanism such as a keyboard and a mouse receiving an operation input from a user.

The output section 13 indicates various output mechanisms such as a display mechanism like a monitor and a print mechanism like a printer.

Then, when executing the various procedures contained in the prediction program 2 of the present invention recorded in the recording section 11 under the control of the control section 10, the computer operates as the prediction device 1 of the present invention.

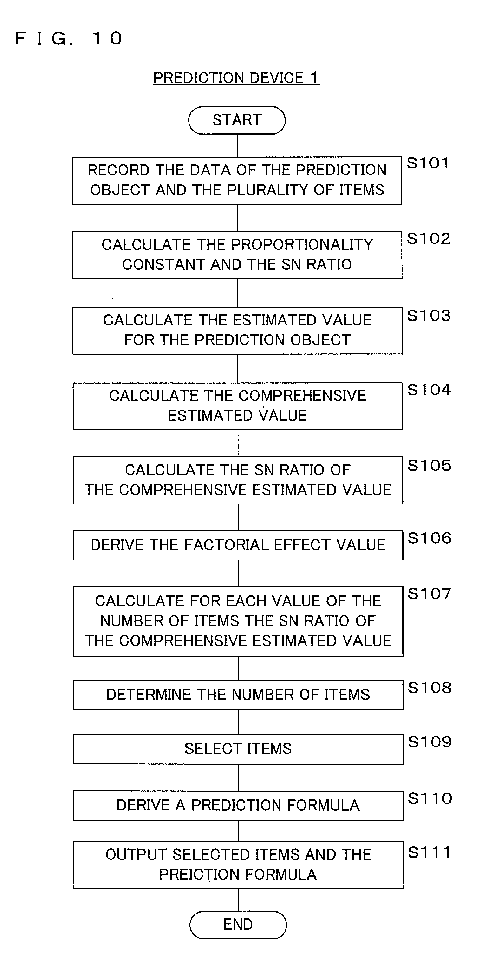

Next, prediction processing using the prediction device 1 of the present invention is described below. FIG. 10 is a flow chart illustrating an example of prediction processing performed by the prediction device 1 of the present invention. Under the control of the control section 10 executing the prediction program 2, the prediction device 1 executes the prediction processing illustrated below.

The control section 10 receives input of data concerning the prediction object and the plurality of items from the input section 12, and then records the received data of the prediction object and the contained items into the database 110 of the recording section 11 (S101). Here, each data to be recorded into the database 110 is not limited to that inputted through the input section 12 and may be input data received from any other device. Further, the input data may be read from any other information recording medium.

The control section 10 calculates the proportionality constant and the SN ratio (the square ratio) for each item by using the above-mentioned Formula 1 and Formula 2 (S102).

Further, the control section 10 calculates the estimated value for the output of the prediction object for each member according to the above-mentioned Formula 3 by using the proportionality constant and the SN ratio (the square ratio) for each item (S103).

Further, on the basis of the above-mentioned Formula 4, the control section 10 calculates the comprehensive estimated value by using as a weighting factor the SN ratio (the square ratio) serving as the estimation precision for the estimated value of each item (S104).

Further, on the basis of the above-mentioned Formula 5, the control section 10 calculates the SN ratio (db) of the comprehensive estimated value from the data and the comprehensive estimated value of the prediction object (S105).

Further, the control section 10 derives as the factorial effect value for each item the SN ratio of the comprehensive estimated value to each data including the data of the item relative to the SN ratio of the comprehensive estimated value to each data excluding the data of the item (S106). At step S106, as illustrated by using FIG. 4, for each item, a value obtained when the SN ratio of a case that the item is included is subtracted from the SN ratio of a case that the item is excluded is derived as the factorial effect value. Here, the SN ratio of the comprehensive estimated value is the strength of correlation of the prediction object and is a value expressed as the logarithm of a value proportional to the inverse of the variance.

Further, the control section 10 calculates for each value of the number of items the SN ratio of the comprehensive estimated value to the data of the plurality of items selected in descending order of the factorial effect value (S107). Detailed processing of calculating for each value of the number of items the SN ratio of the comprehensive estimated value calculated at step S107, that is, the strength of correlation of the prediction object to the data of the plurality of items, is described later.

Further, on the basis of the SN ratio of the comprehensive estimated value for each value of the number of items, the control section 10 determines the number of items (S108). As described by using the graph illustrated in FIG. 6, the determination processing of step S108 is the processing of determining the number of items that maximizes the SN ratio of the comprehensive estimated value, that is, the strength of correlation of the prediction object.

Further, the control section 10 selects items in the number of items determined at step S108, in descending order of the factorial effect value derived at step S106 (S109).

Further, on the basis of the data of the items selected at step 109, the control section 10 derives a prediction formula based on: the weight for each item based on the SN ratio of the comprehensive estimated value to the data of each selected item; and the proportionality constant for each item representing the relation between the data of each selected item and the prediction object (S110). The prediction formula derived at step S110 is the comprehensive estimation formula indicated as the above-mentioned Formula 4. As described above, the employed prediction formula is not necessarily a linear expression representing a linear relation between the item and the prediction object. That is, a prediction formula using a quadratic expression may be derived that represents a nonlinear relation between the item and the prediction object.

Then, the control section 10 records into the recording section 11 the plurality of items selected at step S109 and the prediction formula derived at step S110, and then outputs them through the output section 13 (S111). The plurality of items outputted at step S111 serve as candidates of analysis of the variable factor of the prediction object. Further, by using the outputted prediction formula, actions such as verification of the prediction accuracy, investigation of the analysis result, and prediction of the effect of process improvement are allowed to be performed. For example, when the prediction process step values after process improvement are substituted into the derived prediction formula and then arithmetic operation is performed on the basis of the prediction formula, the effect of process improvement is allowed to be predicted. Here, in a case that conversion processing such as normalization and logarithmic conversion has been performed in advance of the calculation, the inverse transformation of the conversion need be performed on the calculation result of the prediction object.

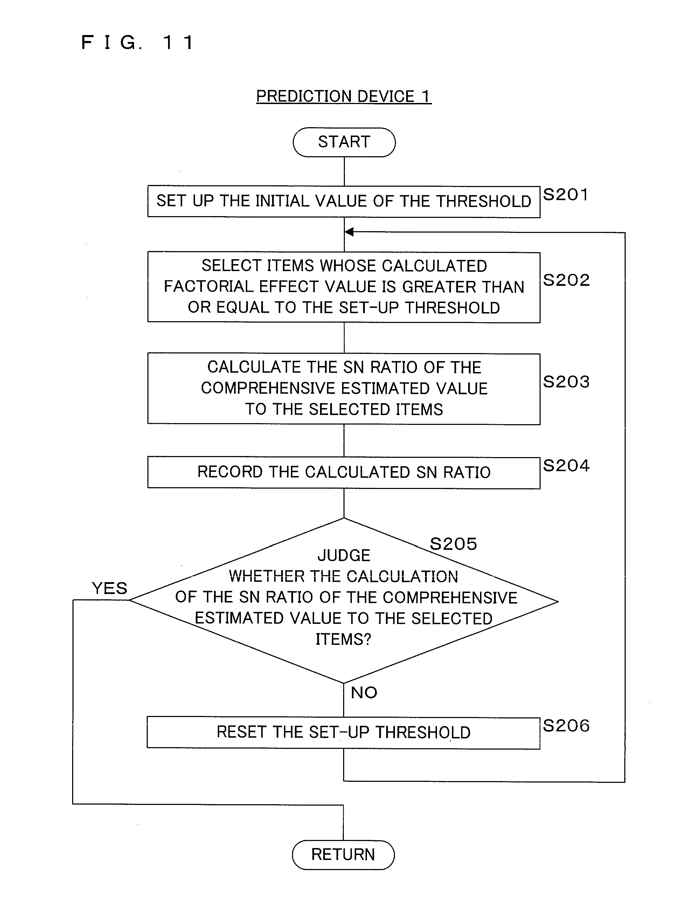

FIG. 11 is a flow chart illustrating an example of prediction processing performed by the prediction device 1 of the present invention. Under the control of the control section 10 executing the prediction program 2, as detailed processing of the processing of step S107 in the prediction processing described by using FIG. 10, the prediction device 1 executes the processing illustrated below. Here, the processing illustrated by using the flow chart of FIG. 11 corresponds to the processing described by using the graph of FIG. 8.

The control section 10 sets up as the initial value of the threshold a value smaller than or equal to the minimum of the factorial effect values derived at step S106 (S201). Step S201 indicates a state that the initial value has been set up in FIG. 8. Here, as illustrated in FIG. 8, when the minimum of the factorial effect values is set up as the threshold, the amount of processing is allowed to be reduced.

Further, the control section 10 selects items whose calculated factorial effect value is greater than or equal to the set-up threshold (S202). In a case that the minimum of the factorial effect values is set up as the initial value of the threshold, all items are selected at the stage of the first step S202.

Further, the control section 10 calculates the strength of correlation of the prediction object to the data of the items selected at step S202, that is, the SN ratio of the comprehensive estimated value (S203), and then records the calculated SN ratio of the comprehensive estimated value into the recording section 11 in a manner of being in correspondence to the number of items (S204).

Further, the control section 10 judges whether the calculation of the SN ratio of the comprehensive estimated value to the selected items has been completed (S205). Step S205 is determination of the end of repeat processing and is the processing of judging whether the calculation processing for the SN ratio of the comprehensive estimated value for each value of the number of items has been completed for each value of the number of items. For example, a completion condition may be set up suitably like a condition that the threshold set up takes a value greater than or equal to the maximum of the factorial effect values, a condition that a factorial effect value greater than or equal to the threshold becomes no longer present as a result of reset of the threshold described later, and a condition that the number of comprehensive estimated values calculated for each value of the number of items becomes equal to the number of items serving as objects of selection.

At step S205, it is judged that the calculation of the SN ratio of the comprehensive estimated value to the selected items has been completed (S205: YES), the control section 10 terminates the processing. That is, the processing of step S108 is terminated and then the processing of step S109 is executed.

At step S205, when it is judged that calculation of the SN ratio of the comprehensive estimated value to the selected items is not completed and hence calculation of the SN ratio of the comprehensive estimated value for a smaller value of the number of items is necessary (S205: NO), the control section 10 resets the set-up threshold to a value increased by a given value (S206) and then goes to step S202 so as to repeat the subsequent processing.

Here, a mode has been described that the initial value of the threshold is set to be smaller than or equal to the minimum of the factorial effect values and then the threshold is reset to a value increased by a given value at each time. Instead, processing reverse to this may be employed. That is, the initial value of the threshold may be set to be greater than or equal to the maximum of the factorial effect values and then items whose calculated factorial effect value is greater than or equal to the set-up threshold may be selected and then the threshold may be reset to a value reduced by a given value at each time. As such, prediction processing is executed by the prediction device according to the present invention.

Next, a detailed implementation example in which the prediction method of the present invention is applied is described below.

(Implementation Example 1)

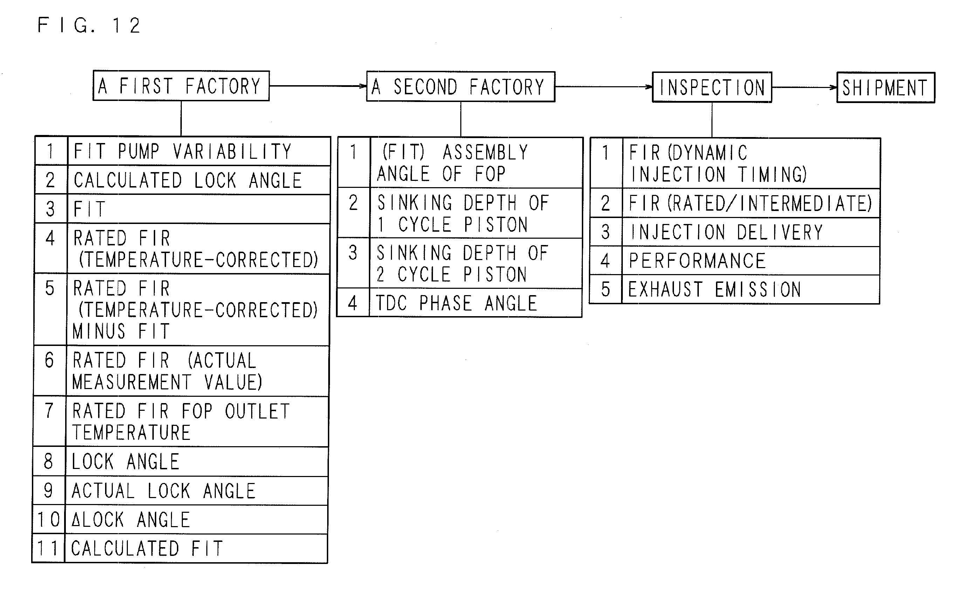

As Implementation Example 1, description is given for an example that the prediction method of the present invention is applied to quality control in an engine factory. FIG. 12 is an explanation diagram conceptually illustrating items concerning quality control according to Implementation Example 1 in which the prediction method of the present invention is applied. The engine according to Implementation Example 1 described with reference to FIG. 12 is fabricated through a manufacturing process in a first factory and a manufacturing process in a second factory. Eleven items of process step values are controlled in the first factory and four items of process step values are controlled in the second factory. Further, the engine serving as a product undergoes total inspection or sampling inspection concerning various items. Five items are the objects of sampling inspection. Among these, "FIR (dynamic injection timing)" is the prediction object in Implementation Example 1.

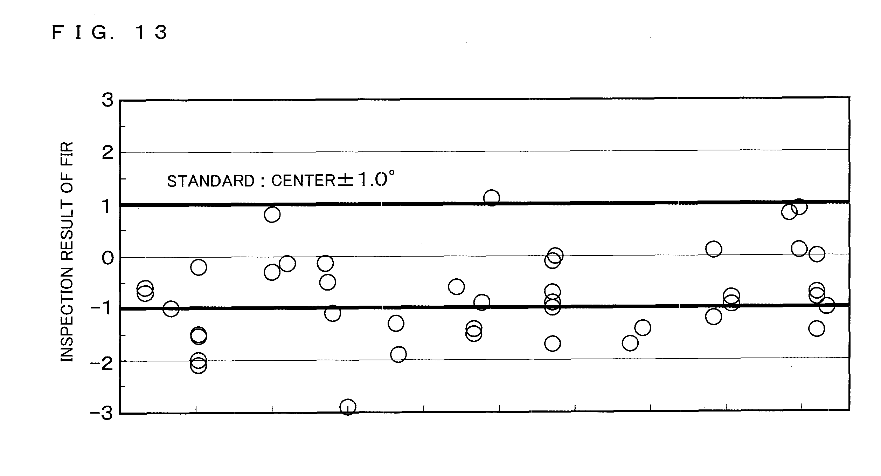

FIG. 13 is a control diagram illustrating a fluctuation of the prediction object according to Implementation Example 1 in which the prediction method of the present invention is applied. FIG. 13 is a control diagram illustrating the inspection result of FIR serving as the prediction object and time-dependently illustrates the situation before process improvement. As illustrated in FIG. 13, as the inspection result, values falling outside the upper limit or the lower limit of the control indicated by thick lines are detected. Thus, the prediction object is set to be FIR and the items allowed to serve as variable factors of the prediction object are set to be the total of 15 items consisting of the eleven items in the first factory and the four items in the second factory. Here, the number of samples to be used in the analysis has been eight points. Thus, the number of items allowed to serve as variable factors is greater than the sample number and hence, obviously, the multiple regression analysis is not applicable.

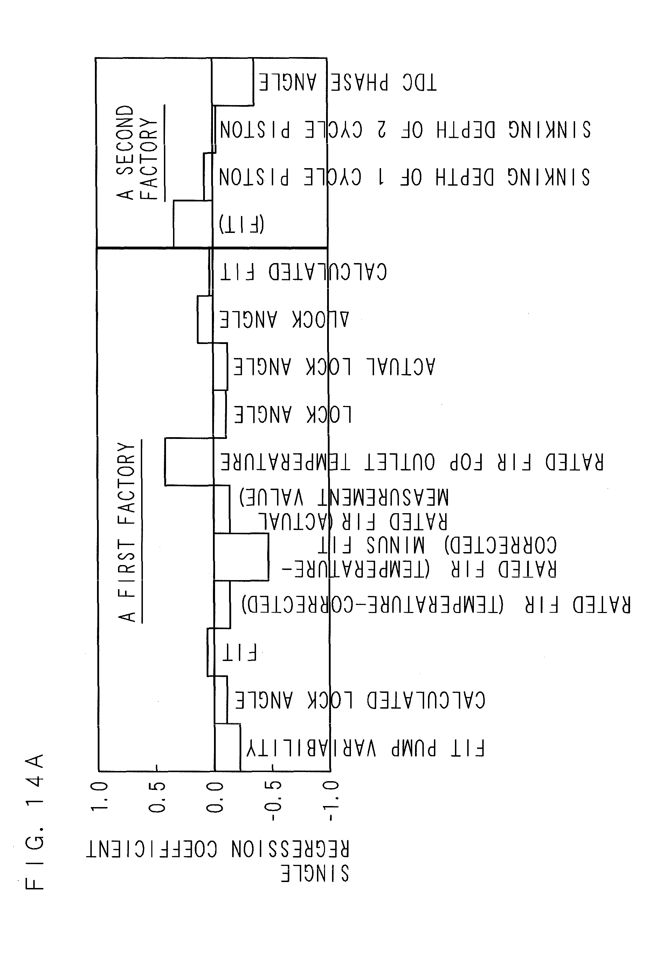

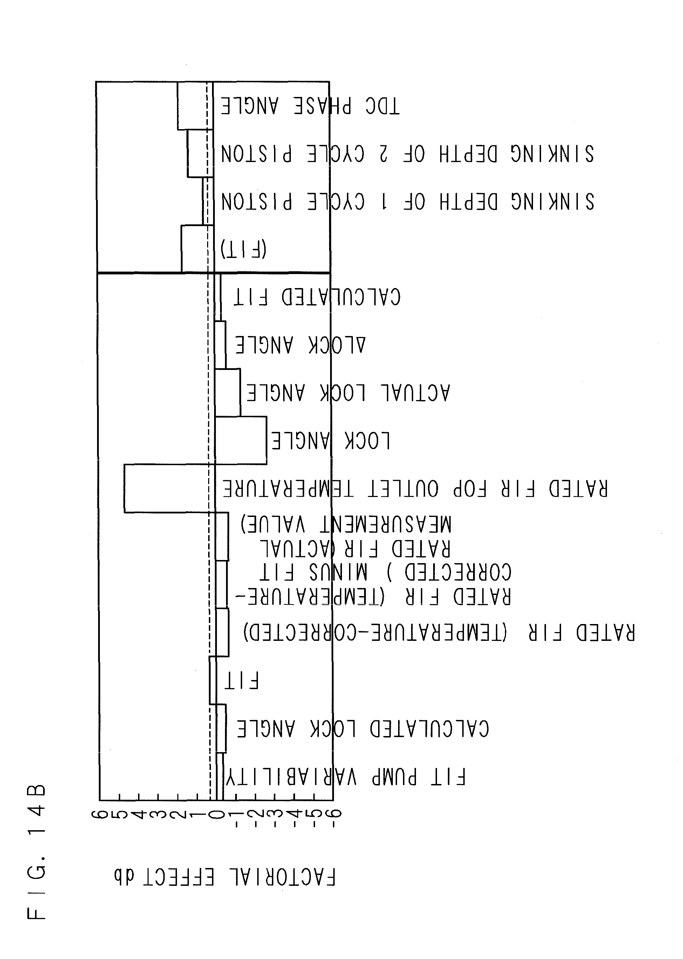

FIG. 14 is a graph illustrating an example of influence on the factorial effect value or the like of each item according to Implementation Example 1 in which the prediction method of the present invention is applied. In FIG. 14A, the horizontal axis indicates each item and the vertical axis indicates a simple linear regression coefficient of the item and the prediction object. Then, the relation between these is illustrated. In Implementation Example 1, since the prediction object is set to be FIR, there are two cases consisting of a positive correlation case that the injection timing is advanced and a negative correlation case that the injection timing is delayed. As seen from the figure, for example, the outlet temperature in the first factory has positive correlation and hence has a strong influence that the injection timing becomes advanced. Further, the TDC phase angle in the second factory has negative correlation and hence has a strong influence that the injection timing becomes delayed.

In FIG. 14B, the horizontal axis indicates each item and the vertical axis indicates the factorial effect value. Then, the degree of the factorial effect value for each item is illustrated in db unit. Here, the dotted line illustrated slightly above the position where the factorial effect value becomes 0 indicates the threshold of a case that the SN ratio of the comprehensive estimated value is maximized when the prediction method of the present invention is applied. In this case, the number of items taking a value greater than or equal to the threshold is 5. Thus, in Implementation Example 1, analysis is performed on these five items. In particular, in the present case that importance is imparted to improvement in the second factory, a conclusion has been obtained that improvement should be performed on the TDC phase angle.

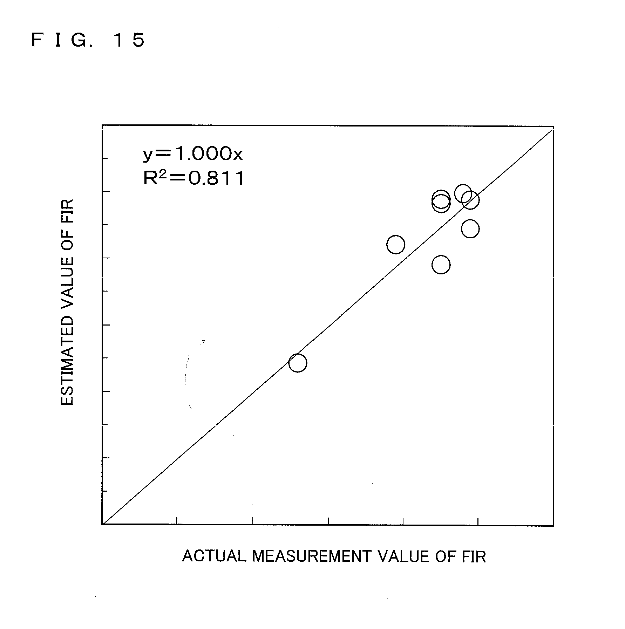

FIG. 15 is a scattering diagram illustrating the relation between the actual measurement value and the estimated value according to Implementation Example 1 in which the prediction method of the present invention is applied. In FIG. 15, the horizontal axis indicates the actual measurement value of FIR and the vertical axis indicates the estimated value of FIR. Then, the relation between these is illustrated. The estimated value of FIR indicates the comprehensive estimated value based on the items selected by applying the prediction method of the present invention. As illustrated in FIG. 15, no remarkably large deviation is present between the actual measurement value and the estimated value. Further, the contribution percentage is also at a level as preferable as 0.811.

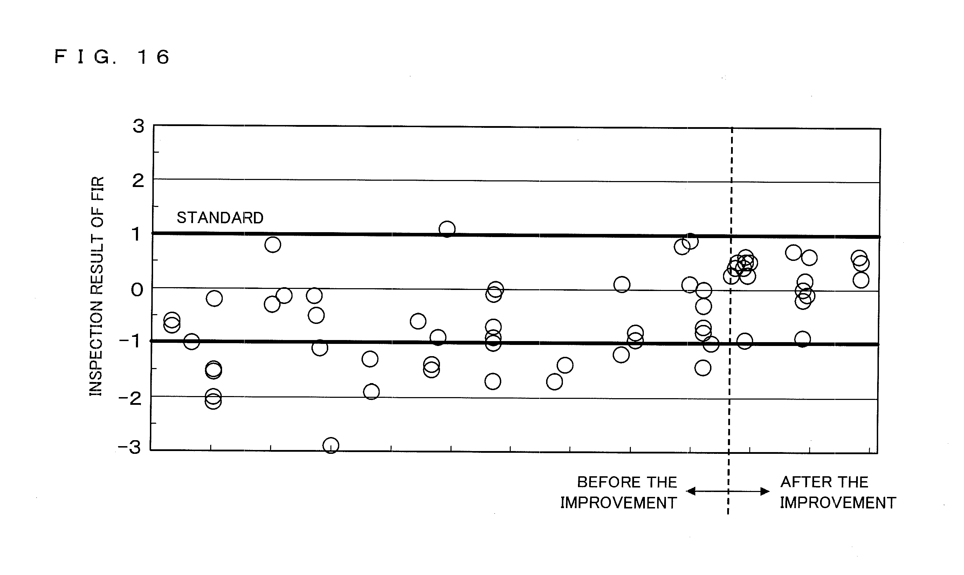

FIG. 16 is a control diagram illustrating a fluctuation of the prediction object according to Implementation Example 1 in which the prediction method of the present invention is applied. FIG. 16 illustrates the inspection results of FIR before and after improvement in a case that the items whose factorial effect value illustrated in FIG. 14B is greater than or equal to the threshold are analyzed further and then improvement is performed on the TDC phase angle. As illustrated in FIG. 16, after the improvement of the TDC phase angle, the number of values falling outside the upper limit or the lower limit of the control indicated by the thick lines is reduced. This indicates that effective improvement has been achieved.

(Implementation Example 2)

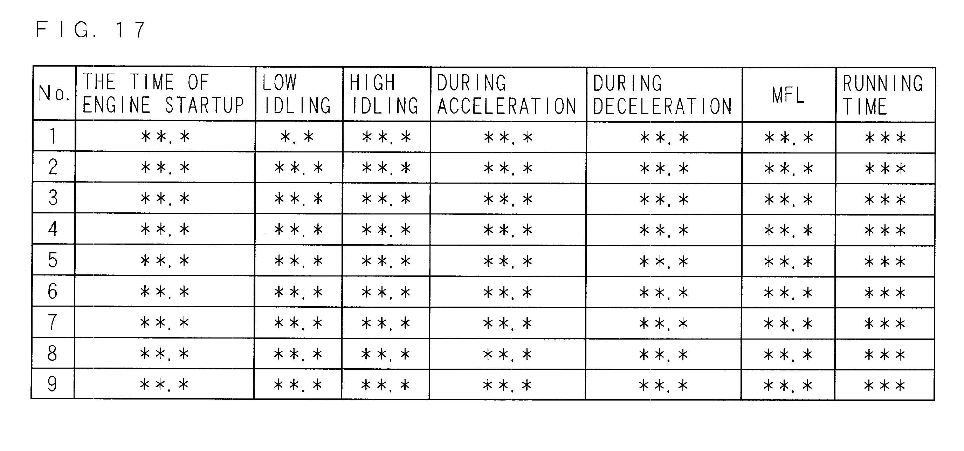

As Implementation Example 2, description is given for an example that the prediction method of the present invention is applied in order to solve a problem that black smoke is generated at the time of engine startup. FIG. 17 is a table illustrating the contents of items according to Implementation Example 2 in which the prediction method of the present invention is applied. In Implementation Example 2, the prediction object has been set to be the amount of generation of black smoke generated at the time of startup (designated by "startup" in the table). Further, six items from the amount of black smoke generation at low idling (designated by "low idling" in the table) to the operating time in FIG. 17 have been adopted as the related items and then analysis has been performed by the prediction method of the present invention.

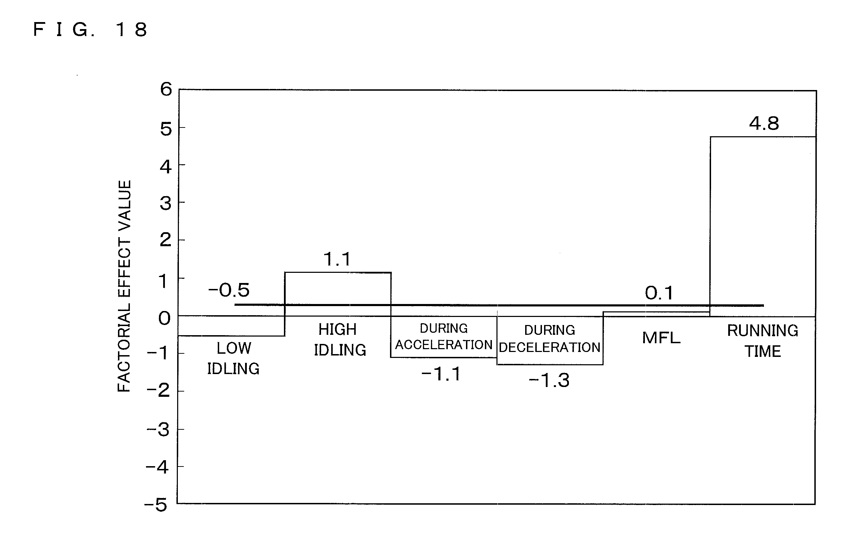

FIG. 18 is a graph illustrating an example of influence on the factorial effect value of each item according to Implementation Example 2 in which the prediction method of the present invention is applied. In the graph illustrated in FIG. 18, the horizontal axis indicates each item and the vertical axis indicates the factorial effect value. Then, the degree of the factorial effect for each item is illustrated in db unit. Here, the solid line illustrated slightly above the position where the factorial effect value becomes 0 indicates the threshold of a case that the SN ratio of the comprehensive estimated value is maximized when the prediction method of the present invention is applied. In this case, the number of items which takes the value greater than or equal to the threshold is 2.

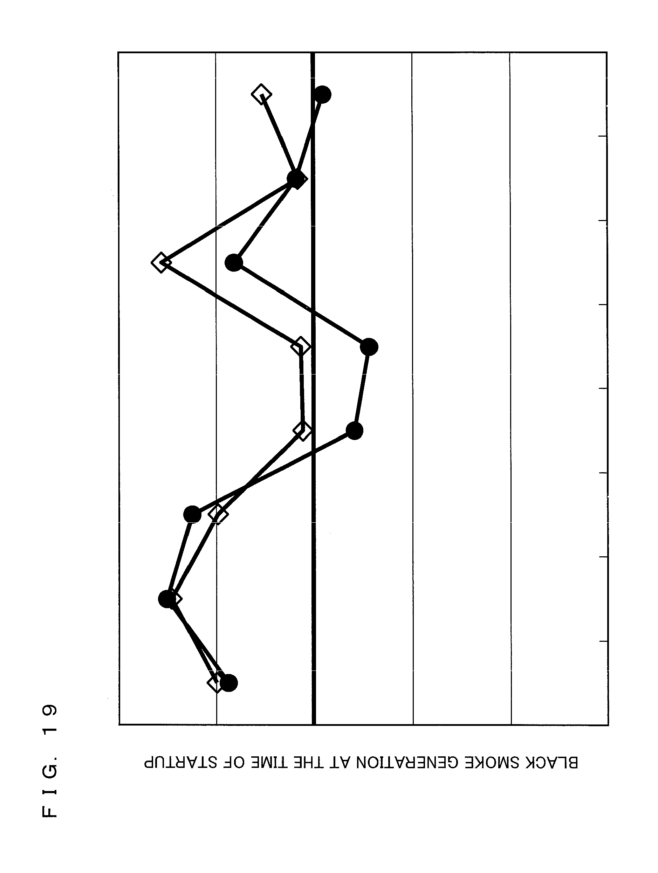

FIG. 19 is a graph illustrating the relation between the actual measurement value and the estimated value according to Implementation Example 2 in which the prediction method of the present invention is applied. In FIG. 19, the horizontal axis indicates the lot of the engine and the vertical axis indicates the amount of black smoke generation at the time of startup serving as the object of prediction. Then, the relation between these is illustrated. Here, each point indicated by a black circle is the actual measurement value and each point indicated by a white square is the predicted value. Further, the horizontal thick line indicates the control criterion for the amount of black smoke generation at the time of startup. From the perspective of quality control, the amount of black smoke generation is requested to be a value smaller than or equal to the thick line. The predicted values in FIG. 19 have been obtained when the prediction formula is derived by using the two items selected as having a factorial effect value greater than or equal to the threshold in FIG. 18 and then calculation is performed by using the derived prediction formula. As illustrated in FIG. 19, the relation between the actual measurement value and the predicted value has correlation and, as seen from this, the prediction formula derived by using the prediction method of the present invention has high reliability.

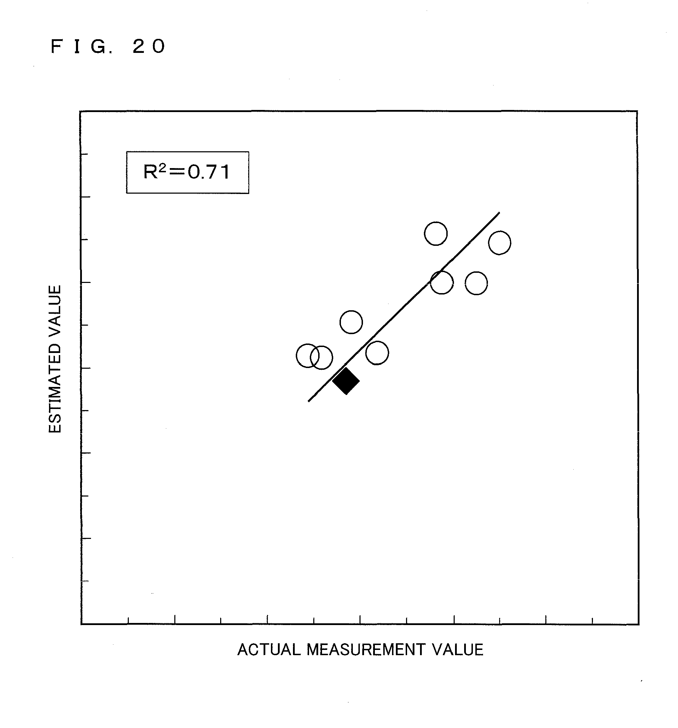

FIG. 20 is a scattering diagram illustrating a relation between an actual measurement value and an estimated value in Implementation Example 2 in which the prediction method of the present invention is applied. In FIG. 20, the horizontal axis indicates the actual measurement value of the amount of black smoke generation at the time of startup and the vertical axis indicates the estimated value for the amount of black smoke generation at the time of startup. Then, the relation between these is illustrated. FIG. 20 illustrates the relation between the actual measurement value and the predicted value illustrated in FIG. 19 in the form of a scatter diagram. As seen also from the scatter diagram, a high correlation is present. Here, the contribution percentage is 0.71. Further, the point indicated by a black square in the figure is a point serving as the reference of unit space at the time of selection of items.

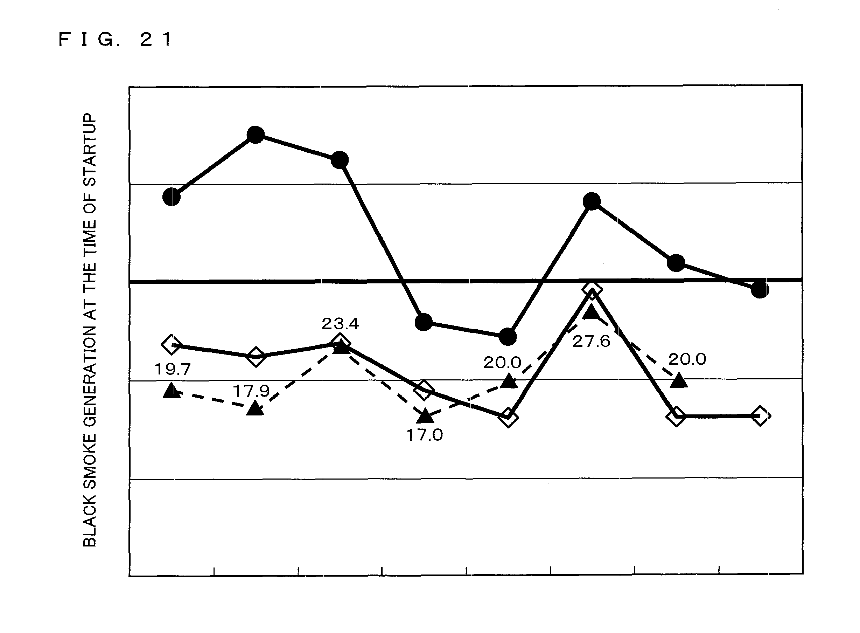

FIG. 21 is a graph illustrating the relation between the actual measurement value and the estimated value according to Implementation Example 2 in which the prediction method of the present invention is applied. In FIG. 21, the horizontal axis indicates the lot of the engine and the vertical axis indicates the amount of black smoke generation at the time of startup serving as the object of prediction. Then, the relation between these is illustrated. Here, each point indicated by a black circle is the actual measurement value before process improvement, which is similar to the value illustrated in FIG. 19. In FIG. 21, the point indicated by a white square indicates the predicted value after process improvement. The process improvement described in Implementation Example 2 indicates improvement in the amount of black smoke generation at the time of high idling among the items serving as the objects of improvement. In FIG. 21, each point indicated by a black triangle indicates the actual measurement value after process improvement. As seen from FIG. 21, by virtue of the process improvement in the amount of black smoke generation at the time of high idling on which attention as the object of improvement has been focused, the amount of black smoke generation at the time of startup is at or below the control criterion. Further, obviously, the predicted value and the actual measurement value in the improvement are close to each other.

The embodiment given above is merely an illustrative example of a part of an infinite number of modes of the present application. The configuration of various hardware, the procedure of processing, the formula, the alternative formula, and other condition settings may be designed suitably in accordance with the purpose, the application, and the like. For example, the embodiment has been described for a mode that the SN ratio using the inverse of the variance is employed as a numerical value representing the strength of correlation. However, the present invention is not limited to this and an indicator such as an energy-ratio type SN ratio having a different definition may be employed.

**Description of Reference Numerals**

1 Prediction device
10 Control section
11 Recording section
12 Input section
13 Output section
110 Database
2 Prediction program

**Claims**

1. A prediction device that is provided with recording means recording data obtained by quantification of a prediction object concerning a product or a production process and data of process step values of a plurality of items allowed to serve as variable factors of the prediction object and that predicts the variable factor of the prediction object on the basis of the data recorded in the recording means, the prediction device comprising:

    derivation means deriving for each item allowed to serve as a variable factor a factorial effect value representing a strength of correlation of the prediction object to the data of each item including the data of the item relative to a strength of correlation of the prediction object to the data of the other items excluding the data of the item;
    calculation means calculating for each value of the number of items a strength of correlation of the prediction object to the data of a plurality of items selected in descending order of the factorial effect value derived by the derivation means;
    determination means determining the number of items on the basis of the strength of correlation for each value of the number of items calculated by the calculation means;
    selection means selecting items in the number of items determined by the determination means, in descending order of the factorial effect value derived by the derivation means; and
    output means outputting a plurality of items selected by the selection means, as a prediction result for the variable factor of the prediction object.

2. The prediction device according to claim 1, wherein
    the calculation means includes:
    means setting up as an initial value of the threshold a value smaller than or equal to the minimum (or greater than or equal to the maximum) of the factorial effect values derived by the derivation means;
    first means selecting an item whose calculated factorial effect value is greater than or equal to the set-up threshold;
    second means calculating a strength of correlation of the prediction object to the data of the selected item; and
    third means resetting the threshold to be a value increased (or a value reduced) by a given value, and wherein
    the first means, the second means, and the third means calculate for each value of the number of items the strength of correlation of the prediction object to the data of a plurality of selected items.

**3.** The prediction device according to claim 1 or 2, further comprising prediction formula derivation means deriving a prediction formula based on a weight for each item based on the strength of correlation of the prediction object to the data of each item selected by the selection means and a proportionality constant for each item representing a linear relation between the data of each selected item and the prediction object or a nonlinear relation alternative to the linear relation.

**4.** A prediction method that a prediction device capable of accessing recording means recording data obtained by quantification of a prediction object concerning a product or a production process and data process step values of a plurality of items allowed to serve as variable factors of the prediction object predicts the variable factor of the prediction object on the basis of the data recorded in the recording means, wherein
the prediction device executes:

a step of deriving for each item allowed to serve as a variable factor a factorial effect value representing a strength of correlation of the prediction object to the data of each item including the data of the item relative to a strength of correlation of the prediction object to each data of the other items excluding the data of the item;
a step of calculating for each value of the number of items a strength of correlation of the prediction object to the data of a plurality of items selected in descending order of the factorial effect value derived by the derivation means;
a step of determining the number of items on the basis of the strength of correlation for each value of the number of items calculated by the calculation means;
a step of selecting items in the number of items determined by the determination means, in descending order of the factorial effect value derived by the derivation means; and
a step of outputting a plurality of items selected by the selection means, as a prediction result for the variable factor of the prediction object.

**5.** A prediction program causing a computer capable of accessing recording means recording data obtained by quantification of a prediction object concerning a product or a production process and data of process step values of a plurality of items allowed to serve as variable factors of the prediction object to execute processing of predicting the variable factor of the prediction object on the basis of the data recorded in the recording means, the prediction program causing
the computer to execute:

a procedure of deriving for each item allowed to serve as a variable factor a factorial effect value representing a strength of correlation of the prediction object to the data of each item including the data of the item relative to a strength of correlation of the prediction object to each data of the other items excluding the data of the item;
a procedure of calculating for each value of the number of items a strength of correlation of the prediction object to the data of a plurality of items selected in descending order of the factorial effect value derived by the derivation means;
a procedure of determining the number of items on the basis of the strength of correlation for each value of the number of items calculated by the calculation means;
a procedure of selecting items in the number of items determined by the determination means, in descending order of the factorial effect value derived by the derivation means; and
a procedure of outputting a plurality of items selected by the selection means, as a prediction result for the variable factor of the prediction object.

F I G.  1

| MEMBER | ITEM 1 | ITEM 2 | · · · | ITEM k | PREDICTION OBJECT |
|--------|--------|--------|-------|--------|-------------------|
| 1 | $X_{11}$ | $X_{12}$ | · · · | $X_{1k}$ | $M_1$ |
| 2 | $X_{21}$ | $X_{22}$ | · · · | $X_{2k}$ | $M_2$ |
| · · · | · · · | · · · | · · · | · · · | · · · |
| $l$ | $X_{l1}$ | $X_{l2}$ | · · · | $X_{lk}$ | $M_l$ |

F I G. 2

| $\beta, \eta$ | ITEM 1 | ITEM 2 | · · · | ITEM k |
|---|---|---|---|---|
| THE PROPORTIONALITY CONSTANT $\beta$ | $\beta_1$ | $\beta_2$ | · · · | $\beta_k$ |
| SN RATIO $\eta$ (THE SQUARE RATIO) | $\eta_1$ | $\eta_2$ | · · · | $\eta_k$ |

F I G. 3

| MEMBER | THE ACTUAL VALUE OF THE PREDICTION OBJECT $M$ | THE COMPREHENSIVE ESTIMATED VALUE $\hat{M}$ |
|---|---|---|
| 1 | $M_1$ | $\hat{M}_1$ |
| 2 | $M_2$ | $\hat{M}_2$ |
| . . . | . . . | . . . |
| $l$ | $M_l$ | $\hat{M}_l$ |

FIG. 4

F I G. 5

THE FACTORIAL EFFECT VALUE dB

ITEM NUMBER

EP 2 725 440 A1

F I G. 6

THE NUMBER OF SELECTED ITEMS

FIG. 7A

Chart: THE SN RATIO OF THE COMPREHENSIVE ESTIMATED VALUE db (y-axis, 16 to 19)

- THE PRESENT INVENTION: 18.79
- THE FACTORIAL EFFECT VALUE IS POSITIVE ONLY: 17.28
- ALL ITEMS: 17.10

F I G. 7 B

FIG. 8

F I G. 9

PREDICTION DEVICE 1

CONTROL SECTION 10

RECORDING SECTION 11

DB 110

PREDICTION PROGRAM 2

INPUT SECTION 12

OUTPUT SECTION 13

DERIVE THE FACTORIAL EFFECT VALUE

CALCULATE FOR EACH VALUE OF THE NUMBER OF ITEMS THE STRENGTH OF CORRELATION OF THE PREDICTION OBJECT

DETERMINE THE NUMBER OF ITEMS

SELECT ITEMS

OUTPUT ITEMS

FIG. 10

PREDICTION DEVICE 1

```
           ╭─────────╮
           │  START  │
           ╰─────────╯
                │
    ┌───────────────────────────┐  S101
    │ RECORD THE DATA OF THE PREDICTION │
    │ OBJECT AND THE PLURALITY OF ITEMS │
    └───────────────────────────┘
                │
    ┌───────────────────────────┐  S102
    │  CALCULATE THE PROPORTIONALITY │
    │   CONSTANT AND THE SN RATIO │
    └───────────────────────────┘
                │
    ┌───────────────────────────┐  S103
    │  CALCULATE THE ESTIMATED VALUE │
    │    FOR THE PREDICTION OBJECT │
    └───────────────────────────┘
                │
    ┌───────────────────────────┐  S104
    │   CALCULATE THE COMPREHENSIVE │
    │       ESTIMATED VALUE │
    └───────────────────────────┘
                │
    ┌───────────────────────────┐  S105
    │     CALCULATE THE SN RATIO OF │
    │ THE COMPREHENSIVE ESTIMATED VALUE │
    └───────────────────────────┘
                │
    ┌───────────────────────────┐  S106
    │  DERIVE THE FACTORIAL EFFECT VALUE │
    └───────────────────────────┘
                │
    ┌───────────────────────────┐  S107
    │ CALCULATE FOR EACH VALUE OF THE │
    │  NUMBER OF ITEMS THE SN RATIO OF │
    │ THE COMPREHENSIVE ESTIMATED VALUE │
    └───────────────────────────┘
                │
    ┌───────────────────────────┐  S108
    │   DETERMINE THE NUMBER OF ITEMS │
    └───────────────────────────┘
                │
    ┌───────────────────────────┐  S109
    │         SELECT ITEMS │
    └───────────────────────────┘
                │
    ┌───────────────────────────┐  S110
    │     DERIVE A PREDICTION FORMULA │
    └───────────────────────────┘
                │
    ┌───────────────────────────┐  S111
    │   OUTPUT SELECTED ITEMS AND THE │
    │       PREICTION FORMULA │
    └───────────────────────────┘
                │
           ╭─────────╮
           │   END   │
           ╰─────────╯
```

# F I G. 1 1

### PREDICTION DEVICE 1

```
          ( START )
              │
┌──────────────────────────────────────────┐
│ SET UP THE INITIAL VALUE OF THE THRESHOLD │ S201
└──────────────────────────────────────────┘
              │
              ▼ ◄──────────────────────────────┐
┌──────────────────────────────────────────┐ │
│        SELECT ITEMS WHOSE CALCULATED       │ │
│ FACTORIAL EFFECT VALUE IS GREATER THAN     │ S202
│   OR EQUAL TO THE SET-UP THRESHOLD         │ │
└──────────────────────────────────────────┘ │
              │                                 │
┌──────────────────────────────────────────┐ │
│       CALCULATE THE SN RATIO OF THE        │ │
│     COMPREHENSIVE ESTIMATED VALUE          │ S203
│        TO THE SELECTED ITEMS               │ │
└──────────────────────────────────────────┘ │
              │                                 │
┌──────────────────────────────────────────┐ │
│       RECORD THE CALCULATED SN RATIO       │ S204
└──────────────────────────────────────────┘ │
              │                                 │
              ▼          S205                    │
        JUDGE                                    │
YES   WHETHER THE CALCULATION                    │
◄── OF THE SN RATIO OF THE COMPREHENSIVE         │
    ESTIMATED VALUE TO THE SELECTED              │
              ITEMS?                             │
              │ NO                               │
┌──────────────────────────────────────────┐ │
│        RESET THE SET-UP THRESHOLD          │ S206
└──────────────────────────────────────────┘ │
              └─────────────────────────────────┘
              │
          ( RETURN )
```

26

# FIG. 12

```
┌─────────────────┐      ┌──────────────────┐      ┌──────────────┐      ┌──────────┐
│ A FIRST FACTORY │─────▶│ A SECOND FACTORY │─────▶│  INSPECTION  │─────▶│ SHIPMENT │
└─────────────────┘      └──────────────────┘      └──────────────┘      └──────────┘
```

| | A FIRST FACTORY |
|---|---|
| 1 | FIT PUMP VARIABILITY |
| 2 | CALCULATED LOCK ANGLE |
| 3 | FIT |
| 4 | RATED FIR (TEMPERATURE-CORRECTED) |
| 5 | RATED FIR (TEMPERATURE-CORRECTED) MINUS FIT |
| 6 | RATED FIR (ACTUAL MEASUREMENT VALUE) |
| 7 | RATED FIR FOP OUTLET TEMPERATURE |
| 8 | LOCK ANGLE |
| 9 | ACTUAL LOCK ANGLE |
| 10 | ΔLOCK ANGLE |
| 11 | CALCULATED FIT |

| | A SECOND FACTORY |
|---|---|
| 1 | (FIT) ASSEMBLY ANGLE OF FOP |
| 2 | SINKING DEPTH OF 1 CYCLE PISTON |
| 3 | SINKING DEPTH OF 2 CYCLE PISTON |
| 4 | TDC PHASE ANGLE |

| | INSPECTION |
|---|---|
| 1 | FIR (DYNAMIC INJECTION TIMING) |
| 2 | FIR (RATED/INTERMEDIATE) |
| 3 | INJECTION DELIVERY |
| 4 | PERFORMANCE |
| 5 | EXHAUST EMISSION |

F I G. 1 3

FIG. 14A

SINGLE REGRESSION COEFFICIENT

1.0
0.5
0.0
-0.5
-1.0

A FIRST FACTORY

A SECOND FACTORY

FIT PUMP VARIABILITY
CALCULATED LOCK ANGLE
FIT
RATED FIR (TEMPERATURE-CORRECTED)
RATED FIR (TEMPERATURE-CORRECTED) MINUS FIT
RATED FIR (ACTUAL MEASUREMENT VALUE)
RATED FIR FOP OUTLET TEMPERATURE
LOCK ANGLE
ACTUAL LOCK ANGLE
ΔLOCK ANGLE
CALCULATED FIT

(FIT)
SINKING DEPTH OF 1 CYCLE PISTON
SINKING DEPTH OF 2 CYCLE PISTON
TDC PHASE ANGLE

F I G. 1 5

ACTUAL MEASUREMENT VALUE OF FIR

FIG. 16

F I G. 1 7

| No. | THE TIME OF ENGINE STARTUP | LOW IDLING | HIGH IDLING | DURING ACCELERATION | DURING DECELERATION | MFL | RUNNING TIME |
|---|---|---|---|---|---|---|---|
| 1 | **.* | *.* | **.* | **.* | **.* | **.* | *** |
| 2 | **.* | **.* | **.* | **.* | **.* | **.* | *** |
| 3 | **.* | **.* | **.* | **.* | **.* | **.* | *** |
| 4 | **.* | **.* | **.* | **.* | **.* | **.* | *** |
| 5 | **.* | **.* | **.* | **.* | **.* | **.* | *** |
| 6 | **.* | **.* | **.* | **.* | **.* | **.* | *** |
| 7 | **.* | **.* | **.* | **.* | **.* | **.* | *** |
| 8 | **.* | **.* | **.* | **.* | **.* | **.* | *** |
| 9 | **.* | **.* | **.* | **.* | **.* | **.* | *** |

F I G. 1 8

EP 2 725 440 A1

FIG. 19

BLACK SMOKE GENERATION AT THE TIME OF STARTUP

F I G. 2 0

$R^2 = 0.71$

ESTIMATED VALUE

ACTUAL MEASUREMENT VALUE

FIG. 21

BLACK SMOKE GENERATION AT THE TIME OF STARTUP

19.7
23.4
17.9
17.0
20.0
27.6
20.0

EP 2 725 440 A1

| **INTERNATIONAL SEARCH REPORT** | International application No. |
|---|---|
| | PCT/JP2012/057844 |

**A. CLASSIFICATION OF SUBJECT MATTER**
*G05B19/418*(2006.01)i, *G06Q10/04*(2012.01)i, *G06Q50/04*(2012.01)i

According to International Patent Classification (IPC) or to both national classification and IPC

**B. FIELDS SEARCHED**

Minimum documentation searched (classification system followed by classification symbols)
G05B19/418, G06Q10/04, G06Q50/04

Documentation searched other than minimum documentation to the extent that such documents are included in the fields searched
    Jitsuyo Shinan Koho        1922–1996   Jitsuyo Shinan Toroku Koho   1996–2012
    Kokai Jitsuyo Shinan Koho  1971–2012   Toroku Jitsuyo Shinan Koho   1994–2012

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | Kazuo TATEBAYASHI, Nyumon MT System, 1st edition, JUSE Press, Ltd., 04 December 2008 (04.12.2008), pages 73 to 90 | 1,4,5<br>3<br>2 |
| Y<br>A | JP 2010-211684 A (Toshiba Corp.),<br>24 September 2010 (24.09.2010),<br>paragraph [0023]<br>(Family: none) | 3<br>2 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 May, 2012 (11.05.12) | 22 May, 2012 (22.05.12) |

| Name and mailing address of the ISA/<br>   Japanese Patent Office | Authorized officer |
|---|---|
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHOICHI TEJIMA ; YOSHIKO HASEGAWA.** Introduction to MT system. JUSE Press, Ltd, December 2008